# EUROPEAN PATENT SPECIFICATION

(11) **EP 3 626 110 B1**
(45) Date of publication and mention of the grant of the patent: **27.01.2021**
(21) Application number: 19197909.5
(22) Date of filing: 18.09.2019
(51) Int. Cl.: A45D 20/12

(54) **DRYER**
TROCKNER
APPAREIL DE SÉCHAGE

(30) Priority: 19.09.2018 US 201862733478 P; 14.12.2018 KR 20180162188; 25.02.2019 KR 20190022026; 22.07.2019 KR 20190088428
(43) Date of publication of application: 25.03.2020
(60) Divisional application: 20214493.7
(73) Proprietor: LG ELECTRONICS INC., Yeongdeungpo-Gu Seoul 07336 (KR)
(72) Inventor: YOO, Hyunsun, Seoul 08592 (KR); CHUN, Jaehung, Seoul 08592 (KR); EUN, Yousook, Seoul 08592 (KR); KIM, Joogyeom, Seoul 08592 (KR); KIM, Sungkyung, Seoul 08592 (KR); KIM, Myongsun, Seoul 08592 (KR)
(74) Representative: Vossius & Partner Patentanwälte Rechtsanwälte mbB

(56) References cited:
- GB-A- 2 500 802
- US-B1- 6 397 003

## Description

The present invention relates to a dryer including a display device, and more particularly to a dryer including a display device, which is disposed at rear of the dryer and configured to display an operating status of the dryer.

A dryer for drying a human body should be designed to prevent the human body from being burn or hurt by drying air and a temperature of the drying air should be maintained at a level at which a user can feel comfortable

Meanwhile, if a drying target is an infant or a pet, the target may have difficulties in communicating with a user of the dryer, has a very sensitive and weak skin, and has a desirable dry state that is different from that of an adult.

Thus, it is necessary to optimize a drying condition according to a drying target.

The website www.soonsooi.com discloses a dryer having a display unit disposed at a rear portion. The dryer disclosed in www.soonsooi.com may be the case where a position of a dryer 173b of a dryer disclosed in KR10-1827356 is changed in position.

The dryer does not include a heat dissipating structure and thus has a problem that properties of the display unit can be degraded due to deterioration due to heat generation of the display unit and heating by a heater during a drying operation.

In addition, the dryer is designed to target only adult scalp and thus has difficulties in performing a drying operation optimized for a skin state and a hair state of a baby or a pet.

Further, since a screen displayed on the display unit of the dryer is fixed, a grip should be placed up right to see numbers and manipulate during a drying operation.

US 6 397 003 B1 discloses a hair dryer having a LED display circuit at a rear side thereof.

Following are technical objects of the present invention.

First, the present invention is to provide a dryer which helps a display device dissipate heat smoothly so that deterioration of the display device can be reduced.

Second, the present invention is to provide a dryer which can be easily controlled by a user with a drying temperature optimized for a drying target.

Third, the present invention is to provide a dryer which allows a graphic object shown in a screen of the display device to be recognized and controlled easily.

In order to achieve the above objects, the present invention provides a dryer according to claim 1.

The display device may be disposed on an outer surface of the rear cover.

An edge of a rear surface of the rear cover side wall may be connected to a rear edge of the casing.

The rear cover may include a plurality of through holes to introduce air, and the plurality of through holes may be disposed at at least one of the rear cover side wall or the rear cover plate.

The display device may be disposed on the rear cover plate and surrounded by the rear cover side wall.

The display device may be disposed between the front and the rear of the front cover side wall.

The rear cover plate has a insertion hole formed at a center thereof, and the display device is inserted into and coupled with the insertion hole.

The display device may include a flared display fixing base in which a cross-sectional area increases from the front toward the rear of the rear cover

In addition, the display device may include a display panel disposed at one end of the display fixing base, the one end which is adjacent to the rear of the rear cover.

In another general aspect, the present invention provides a dryer of which a display device is capable of displaying a drying suggested temperature according to birth information of a drying target.

Specifically, the display device may display a graphic object on at least one of a plurality of display areas.

The display device may include a controller, and the controller may be configured to select a drying object and to change the graphic object based on pre-stored birth information, including at least one of age and a species of the selected drying object, to a drying suggested temperature.

The selecting of the drying object may include: changing, by the controller, the graphic object to pre-stored drying objects, and selecting, by a user, one of the changed graphic objects.

Alternatively, the controller may be configured to recognize an identification tag attached to the graphic object and then change the recognized drying object.

The dryer may further include an air temperature sensor configured to sense air temperature information of blowing air.

The controller may be configured to display the graphic object that is changed to an air temperature on at least one of the plurality of display areas based on the air temperature information.

The dryer may further include an external temperature sensor configured to sense body temperature information of a drying object.

The controller may be configured to display the graphic object that is changed to a body temperature on at least one of the plurality of display areas based on the body temperature information.

The dryer may further include a battery.

The controller may be configured to sense charge information of the battery and to display the graphic object that is changed to at least one of a charge rate and a remaining operating time based on the charge information on at least one of the plurality of display areas.

The controller may be configured to sense wind speed information and to display the graphic object that is changed to a dry intensity on at least one of the plurality of areas based on the wind speed information.

The dryer may further include a gyro sensor configured to sense motion information of the dryer.

The controller may be configured to restrict displaying of the graphic object when the motion information exceeds a reference level and to display the graphic object when the motion information is equal to or lower than the reference level.

The controller may be configured to enlarge a display area selected by a user from among the plurality of display areas showing the graphic object, while reducing remaining display areas not selected by the user.

In yet another general aspect, the present invention provides a dryer including: a hollow casing having an open front and an open rear; and a display device disposed at the open rear of the casing to cover at least a part of the open rear.

The display device may include a controller configured to display a graphic object on at least one of a plurality of display areas and to rotate the graphic object according to a motion of the dryer.

The dryer may further include a gyro sensor configured to sense motion information of the dryer,

The display device may include a display panel comprising a screen where the graphic object is displayed.

The controller may be configured to rotate the screen of the display panel based on rotation information regarding the rotating of the graphic object.

An upper point, a lower point, a left point, and a right point meeting an edge of the display panel may be set by virtual lines that vertically and horizontally cross a center of the screen where the graphic object is displayed.

The controller may be configured to rotate the screen of the display panel so that the lower point is positioned most closest to a ground surface in the edge of the screen of the display panel.

Other unmentioned technical solutions can be clearly understood from the following description by those having ordinary skill in the technical field to which the present invention pertains.

### BRIEF DESCRIPTION OF THE DRAWINGS

FIG. 1 is a perspective view of a dryer according to an embodiment of the present invention.
FIG. 2 is a cross-sectional view of the dryer shown in FIG. 1.
FIG. 3 is an exploded perspective view of the dryer shown in FIG. 2.
FIG. 4 shows operation of a dryer, which is displayed on a display device included in an embodiment of the present invention.
FIG. 5 is a flow chart of a controller according to an embodiment of the present invention.
FIG. 6 is a diagram showing a method for selecting a drying object according to an embodiment of the present invention.
FIG 7 shows operation of a dryer displayed in a display device according to an embodiment of the present invention.
FIG. 8 shows an operation in which a graphic object displayed on a display device according to an embodiment of the present invention is rotated according to a motion of a dryer.

The advantages and features of the present invention and a method of achieving them will become apparent with reference to the embodiments described in detail below together with the accompanying drawings. However, the present invention is not limited to the embodiments set forth herein but may be embodied in many different forms, and these embodiments are provided so that the disclosure of the present invention is complete and that those skilled in the art will fully understand the scope of the present invention, and the present invention is only defined by the scope of the claims. Like reference numerals designate like elements throughout the specification.

Hereinafter, a dryer according to an embodiment of the present invention will be described with accompanying drawings.

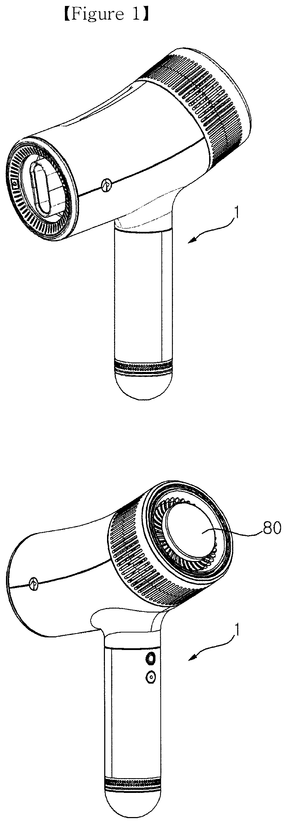

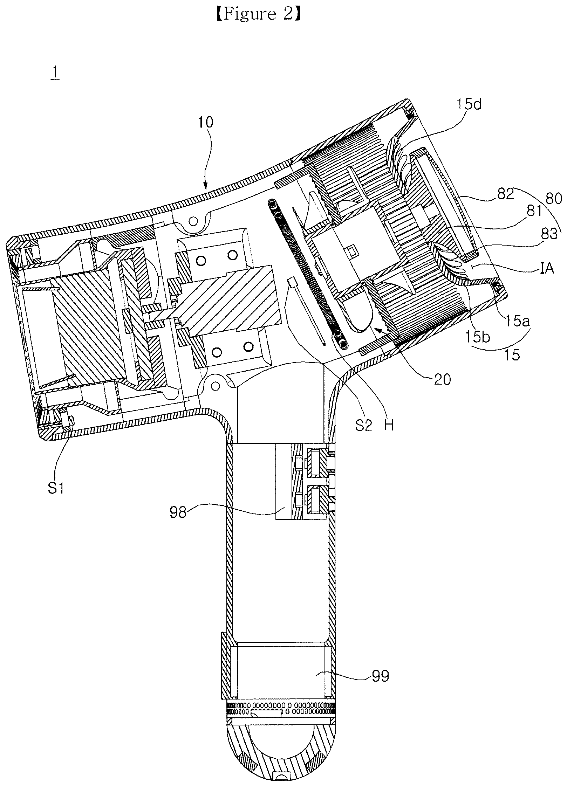

First, a basic configuration and operation of a dryer 1 according to an embodiment of the present invention will be described with reference to FIGS. 1 and 2.

The dryer 1 includes a fan 20 to introduce air from an outside and blow the air, and a heater H to heat the air to be sent.

Specifically, the dryer 1 includes a hollow casing 10, the fan 20 accommodated in the casing to introduce external air into the casing 10 and blow the air, and the heater H installed at a downstream side of the fan 20 to heat air.

More specifically, the hollow casing 10 are open at the front and the rear so that air introduced from the rear can be discharged through the front.

The external air may be introduced through the open rear by the fan 20 accommodated in the casing 10.

The fan 20 may be installed inside at a rear side of the casing 10 and may introducing external air through the open rear of the casing 10 and discharging the introduced air through the front of the casing 10 at the same time.

The air introduced by the fan 20 may be heated by the heater H and is then discharged through the open front of the casing 10.

The heater H installed at a downstream side of the fan 20 may be formed as a ring-shaped coil heater.

An air temperature sensor S2 may be installed at a downstream side of the heater H and sense temperature of blowing heated air, and the air temperature sensor S2 may be provided as a pair of sensors installed on the left and right sides in front of the heater H.

However, the shapes and structure of the fan 20, the heater H, and the air temperature sensor S2 vary and are not limited to the above disclosure and the structure shown in the drawings, and they may include any shape and any structure which can be easily modified by those skilled in the art.

In addition, the dryer according to an embodiment of the present invention may include a battery 99 to provide power to the fan 20 and the heater H.

Accordingly, the dryer 1 according to an embodiment of the present invention can be used even without external power supplied, and therefore, the use of the dryer 1 is not limited and utility thereof can be maximized.

Further, the dryer 1 may include an external temperature sensor S1 to sense temperature of a target object to dry or a target body part to dry, and a controller 98 to control operation of the dryer 1.

The dryer 1 according to the present invention includes a display device 80 disposed at the rear of the casing 10 to thereby cover at least a part of the rear which is open.

The display device 80 may visually display an operating status of the dryer 1 to be recognized by a user, and a detailed description thereof will be provided later on.

In the specification, the expression "the display device covering the rear" means a structure in which the open rear of the casing 10 and the display device 80 overlap each other when the display device 80 is seen from a vertical direction.

In the dryer 1 according to an embodiment of the present invention, the display device 80 is disposed at rear of the open rear of the casing, through which air is suctioned, so that deterioration of the display device 80 can be reduced.

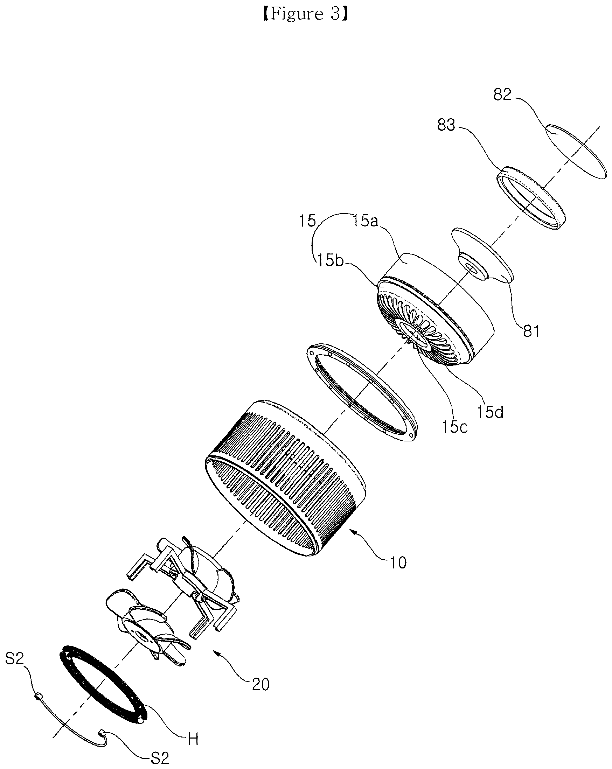

Regarding the above, a structure to couple the casing 10 and the display device 80 will be described with reference to FIGS. 2 and 3.

The dryer 1 according to an embodiment of the present invention may include a rear cover 15 that is connected to a rear edge of the casing 10 to thereby cover the rear of the casing 10.

The rear cover 15 includes a cylindrical rear cover side wall 15a which is open at the front and the rear, and a rear cover plate 15b to cover the front of the rear cover side wall 15a.

The rear cover side wall 15a may be accommodated in the casing 10 and disposed in a rear side with a cylindrical open one surface facing front and the other surface facing the rear.

The edge of the rear of the rear cover side wall 15a may be connected to the rear edge of the casing 10 and thus coupled thereto.

The meaning of "coupling" mentioned above or below may refer to a case where two elements are integrally formed or assembled by a well-known coupling technique such as fusion, adhesion, forcible insertion, screw fastening, bolt fastening, and key engagement.

The front of the rear cover side wall 15a may be shielded by the rear cover plate 15b.

The rear cover plate 15b is a curved plate that protrudes convexly toward the front of the casing 10.

In the specification, a description that the front of the rear cover side wall 15a is shielded by the rear cover plate 15b should be understood to mean that the rear cover plate 15b is disposed at the front of the rear cover side wall 15a so that at least a part of the front of the rear cover side wall 15a is shielded.

A insertion hole 15c may be formed in the rear cover plate 15b, and the display device 80 may be inserted into and coupled with the insertion hole 15c.

For example, the insertion hole 15c may be formed at the center of the rear cover plate 15b.

The display device 80 may include a display fixing base 81 connecting the display device 80 and the rear cover plate 15b, and a display panel 82 visually displaying an operating status of the dryer 1.

Specifically, the display fixing base 81 may be a flared type, of which a cross-sectional area increases front the front to the rear of the rear cover 15, and the display fixing base 81 may form a bottom appearance of the display device 80 and provide an area where a display panel 82 can be arranged.

The display panel 82 may be disposed on one end of the display fixing base 81 adjacent to the rear of the rear cover side wall 15a, and visually display an operating status of the dryer 1 to a user.

In addition, the display panel 82 according to an embodiment of the present invention may include a touch panel so that the user is allowed to directly control operation of the dryer 1 through the display panel 82.

Further, the display device 80 may further include a joint ring 83 that connects the display panel 82 and the display fixing base 81 so that the display panel 82 and the display fixing base 81 are jointed.

The joint ring 82 may be a ring shape that can make the display panel 82 and the display fixing base 81 jointed separately.

For example, the display panel 82 may be seated in and coupled with a step formed at one end of the joint ring 83, and the display fixing base 81 may be seated in and coupled with a step formed at the other end of the joint ring 83.

Further, the joint ring 82 may be also used for decoration.

However, functions, shapes, and structures of the display fixing base 81, the display panel 82, and the joint ring 83 are not limited to the above disclosure and the drawings and may include a range that can be easily modified by those skilled in the art.

An end of the display fixing base 81 being adjacent to the front of the rear cover side wall 15a may be inserted into the insertion hole 15c formed at the center of the rear cover plate 15b, so that the display device 80 is coupled on an outer surface of the rear cover 15.

In the dryer 1 according to an embodiment of the present invention, an introduction area IA may be formed between the display device 80 and the rear edge of the casing 10, and therefore, air may be introduced into the casing 10 through an air introduction through hole 15d formed in a rear cover 15.

Specifically, the introduction area IA may be an opened area and may be formed between the display device 80 and the rear edge of the casing 10 since the display device 80 and the rear edge of the casing 10 are spaced apart from each other.

When the fan 20 accommodated in the casing 10 is rotated, negative pressure is formed inside the casing 10 and thereby air is introduced into the casing 10 through the introduction area IA.

The air introduced into the casing 10 may move further inside the casing 10 through a plurality of air introduction through holes 15d formed in the rear cover 15.

The plurality of through holes 15d may be disposed at at least one of the rear cover side wall 15a and the rear cover plate 15d and may be, for example, formed to surround the insertion hole 15c. However, the shape of the through holes 15d is not limited to the above disclosure and the drawings.

In the dryer 1 according to an embodiment of the present invention, the display device 80 is disposed in an area where air is introduced, thereby decreasing deterioration of the display device 80.

Although heat is generated in operation or heat is generated by the heater H, the display device 80 may effectively dissipate heat and be cooled, and therefore, pixel damage caused by deterioration may be reduced.

Specifically, although heat is generated in the display panel 82, external air can be rapidly introduced into the casing 10 through the introduction area IA, and therefore, the heat generated in the display panel 82 may be dissipated into the casing 10.

In addition, although the heat generated in the display panel 82 fails to be dissipated into the casing 10 or although the display device 80 is heated by a wavelength occurring in the heater or the like, external air of room temperature may be introduced into the casing 10 and thereby cool the display device 80, and therefore, the display device 80 may be prevented from excessively increasing.

In addition, in the dryer 1 according to an embodiment of the present invention, the display device 80 may be disposed inside the rear side of the casing 10, and therefore, durability of the display device 80 may be enhanced.

Specifically, the display device 80 may be disposed on the rear cover plate 15b and surrounded by the rear cover side wall 15a, and therefore, an external impact to be delivered to the display device 80 may be minimized.

More specifically, the display device 80 may be disposed between the front and the rear of the rear cover side wall 15a, and therefore, there is no portion of the display device 80 protruding outward of the casing 10.

Accordingly, even when the driver 1 falls down or off in a rearward direction, most of the impact is not delivered not directly to the display device 80 and instead it may be absorbed by the rear edge of the casing 10 or to the rear cover side wall 15a.

In addition, when the driver 1 is seen from a side, the display device 80 does not have a portion protruding from the casing 10, which helps to achieve a tidy appearance, and therefore, there is an advantageous effect in terms of design.

Further, in the driver 1 according to an embodiment of the present invention, the rear cover plate 15b where the display device 80 is inserted and coupled is formed convexly toward the front of the casing 10, and therefore, coupling stability may be improved.

The rear cover plate 15b is convex toward the front and may be in a dorm shape.

The rear cover plate 15b may improve durability due to the dorm shape. Stress may be repeatedly applied by a user's touch input that is input to the display device 80 coupled with the center of to the rear cover plate 15b.

However, as the rear cover plate 15b is formed in the dorm shape that is formed convexly toward the front, it is possible to prevent stress from being gathered at the center of the rear cover plate 15b coupled with the display device 80 and to distribute the stress to the entire rear cover plate 15b to thereby improving durability.

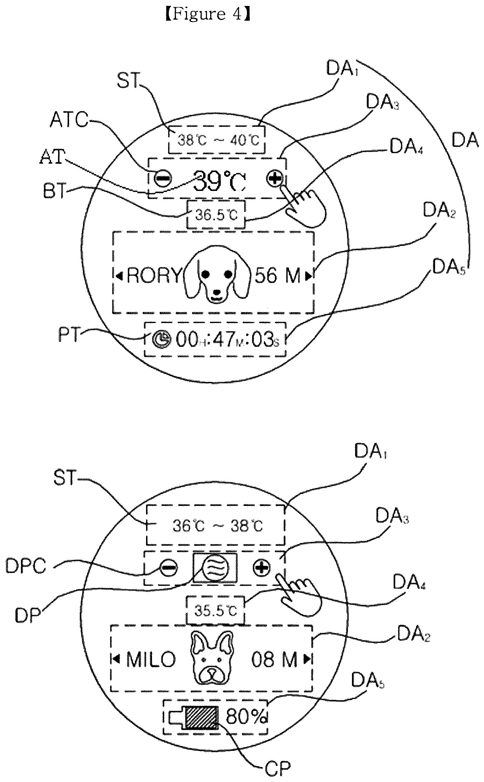

Next, contents to be visually displayed on the display device 80 according to an embodiment of the present invention will be described with reference to FIGS. 4 to FIG. 8.

The display panel 82 of the display device 80 includes a plurality of display areas DA on a screen, and displays a graphic object on at least one of the plurality of display areas DA.

For example, dray suggested temperature ST according to a drying object DO may be displayed as the graphic object to be displayed visually.

The plurality of display areas DA or DA1 to DA5 included in the display device 80 is areas in which a substantially changed graphic object is presented. However, the plurality of display areas DA1 to DA5 is not limited to specific locations in the display device 80 shown in the drawings.

The graphic object is an object that is displayed in a display area DA and thus visually recognizable by a user.

In order to visually provide information on various operating statuses to the user at the same time, the dryer 1 according to the present invention may provide the graphic object on the plurality of display areas DA at the same time.

The drying suggested temperature ST may be calculated through selection of the drying object DO and data processing accordingly.

Specifically, a controller 98 selects the drying object DO (S10), derives the suggested temperature ST according to age and a species of the drying object DO based on pre-stored birth information of the selected drying object DO (S20), and changes the graphic object to the drying suggested temperature ST (S30).

The dryer 1 according to an embodiment of the present invention may select the drying object DO (S10).

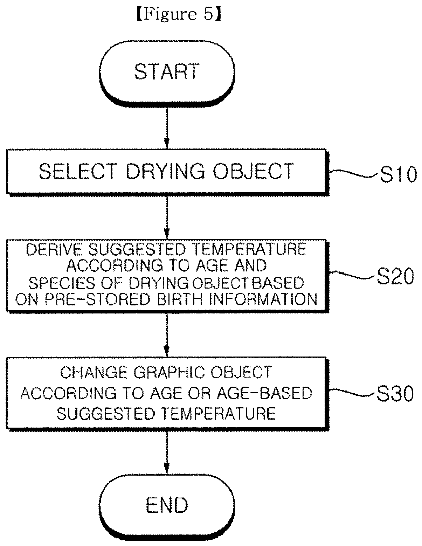

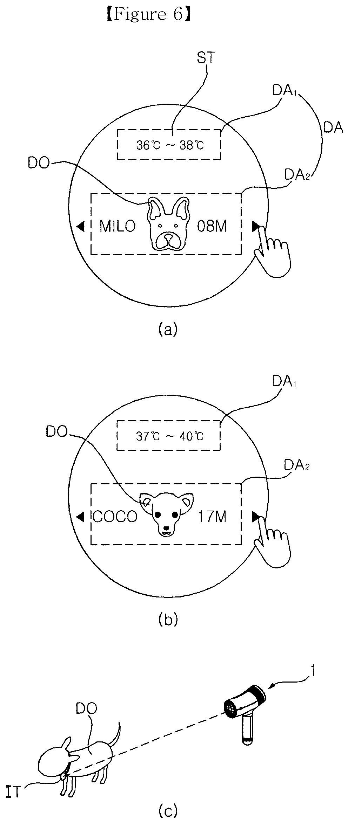

Referring to FIGS. 5 and 6, the controller 98 may change the object graphic object to pre-stored drying objects DO and a user may select one of the changed graphic objects.

The user may pre-store the drying objects DO in the controller 98 through the Internet, a mobile phone application, or the like which is linked with the controller 98.

Specifically, referring to (a) and (b) of FIG. 6, the controller 98 may change graphic objects to pre-stored drying objects DO and display the drying objects DO on the display device 80 sequentially or simultaneously.

The user may select a drying object DO from among the graphic objects changed in correspondence to the drying objects, thereby confirming the drying object DO.

The user may select some of the graphic objects displayed on the display device 80 by directly touching the display device 80 or by using a selection member (pen) or the like.

In addition, referring to FIG. 6, the dryer 1 may automatically recognize and select the drying object DI without the user's selection of the drying object DO.

Specifically, one drying object DO may have an identification tag IT that differentiates the drying object DO from other drying objects.

The controller 98 of the dryer 1 makes a selection by recognizing a unique identification tag IT, and thus, the controller 98 may change a graphic object to a drying object corresponding to the recognized identification tag IT and display the drying object on the display device 80.

The identification tag IT may be formed as an accessory such as a necklace or an anklet, but a type of the identification tag IT is not limited to the above disclosure or the drawings and may include a range that can be easily modified by those skilled in the art.

The controller 98 may be wirelessly connected to the identification tag IT and thereby recognize the identification tag IT.

Specifically, each of the controller 98 and the identification tag IT may include a wireless communication unit (not shown) and thereby exchange data with each other. For example, if the wireless communication unit includes a Near Field Communication (NFC) module and tagging is performed within a predetermined distance, the controller 98 and the identification tag IT may communicate each other wirelessly.

However, the method for recognizing the identification tag IT by the controller 98 and the configuration of the controller 98 are not limited to the above disclosure and may include a range that can be easily modified by those skilled in the art.

Referring again to FIGS. 4 and 5, when a drying object DO is displayed on the display device 80, the controller 98 may display the drying object DO and a drying suggested temperature ST for the drying object DO together.

The controller 98 may derive the drying suggested temperature ST based on pre-stored birth information including at least one of age and a species of the drying object DO (S20), and change a graphic object with the drying suggested temperature ST (S30).

In addition, the controller 98 may also change the graphic object to age of the drying object DO based on the birth information.

The birth information may include at least one of a species (dog, cat, human, snake, mouse, etc.) of the drying object DO, and classification and a birth date of the species (e.g., Siberian Husky, Maltese, Shiba, etc. when the drying object DO is a dog).

The controller 98 may calculate age of the drying object DO based on the birth information, and displays a drying suggested temperature optimized for the drying object DI based on a species and classification of the species, thereby minimizing stress that can affect the drying object DO during a dry operation.

For example, when the drying object DI is a dog, a puppy has sensitive skin and short hair compared to a grown-up dog and thus a drying operation needs to be performed at a relatively low temperature.

In addition, dogs may be classified into long-haired dogs and short-haired dogs according to hair length or dogs may have a thin or thick fat layer under skin. Thus, optimized drying suggested temperature ST may vary according to each drying object DO.

The dryer 1 according to an embodiment of the present invention may include an air temperature sensor S to sense temperature information of blowing air.

The controller 98 may change the graphic object using air temperature AT and an air temperature control ATC based on the air temperature information.

The drying suggested temperature ST displayed upon selection of the drying object DO and the air temperature AT of blowing air are displayed together on the display device 80.

Thus, as a user may manipulate the air temperature control ATC using a touch so that the air temperature AT is maintained within a range of the suggested temperature ST, a dry operation may be performed at a temperature optimized for the drying object DO.

The driver 1 according to an embodiment of the present invention may include an external temperature sensor S1 to sense body temperature information of the drying object DO.

For example, the external temperature sensor S1 may be disposed at a front outlet of the dryer 1 to sense body temperature information of the drying object DO using an infrared device.

The controller 98 changes the graphic object to a body temperature BT based on body temperature information of the drying object DO.

Further, the controller 98 may change the graphic object to the body temperature BT, the air temperature, and the drying suggested temperature ST at the same time, and therefore, a dry operation may be performed effectively.

That is, controller 98 may display a current body temperature BT, the drying suggested temperature ST, and the air temperature AT together on the display device 80.

Thus, as the current body temperature and the drying suggested temperature ST are taken into consideration, a dry operation may be performed optimally without causing stress to the drying object DO due to drastic change in temperature.

The dryer 1 according to an embodiment of the present invention includes a battery 99.

The controller 98 senses charge information of the battery 99 and changes the graphic object to at least one of a charge rate CP and a remaining operating time PT based on the charge information.

Thus, the user may predict a time available for drying, and thus, it is possible to prevent a drying operation from being stopped suddenly.

In the dryer 1 according to an embodiment of the present invention, the controller 98 may sense wind speed information of the fan 20, and change the graphic object to drying intensity DP and a drying intensity control (DCP).

Thus, the user may increase or decrease a wind speed according to a drying situation.

The dryer 1 according to an embodiment of the present invention may further include a gyro sensor (not shown) that senses motion information of the dryer 1.

For example, the gyro sensor may sense motion information on a degree of rotation of the dryer 1 in three-dimension (3D) and a speed of rotation of the dryer 1.

When it is determined, based on the motion information, that the speed of rotation of the dryer 1 exceeds a pre-stored reference level, the controller 98 may restrict displaying of the display device 80.

Further, when the speed of rotation of the dryer 1 is equal to or lower than the reference level, the controller 98 may maintain displaying of the display device 80.

The controller 98 according to an embodiment of the present invention may determine, based on the motion information, whether a drying operation is performed actually, and may restrict displaying of the display device 80 while the drying operation is performed, and therefore, power of the battery 99 may be used effectively.

For example, when the speed of rotation of the dryer 1 is equal to or lower than the reference level, the controller 98 may determine that the dryer 1 is not being rotated but is stopped.

While the dryer 1 is stopped, an operation of the dryer 1 may be controlled by restricting displaying of the display device 80.

However, the restricting of the displaying of the display device 800 based on the motion information is not essential and may not be performed according to a user's setting.

The controller 98 according to an embodiment of the present invention may enlarge a display area DA selected by a user from among a plurality of display areas DA1 to DA5 or DA expressing graphic objects, and reduce the remaining display areas DA not selected by the user.

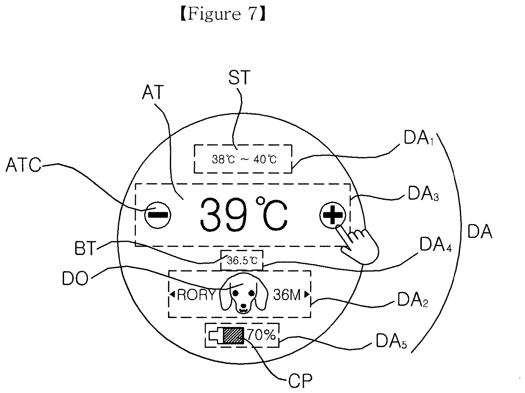

For example, referring to FIG. 7, the user needs to touch or select a portion indicative of increase in the air temperature control ATC in order to increase the dry air temperature AT.

At this point, if a user first selects the display area DA3 showing the air temperature AT and the air temperature control ATC from among the various display areas DA1 t DA5, the controller 98 may enlarge the selected display area DA3 while reducing the unselected display areas DA1, DA2, DA4, and DA5.

Thus, the user may increase the air temperature AT by easily selecting the air temperature control ATC enlarged in the enlarged display area DA3.

The controller 98 according to an embodiment of the present invention may rotate the graphic object according to a motion of the dryer 1.

That is, the controller 98 according to an embodiment of the present invention rotates the graphic object by reflecting a rotated state and a tilting state of the dryer 1, thereby allowing the user to easily recognize and control the graphic object.

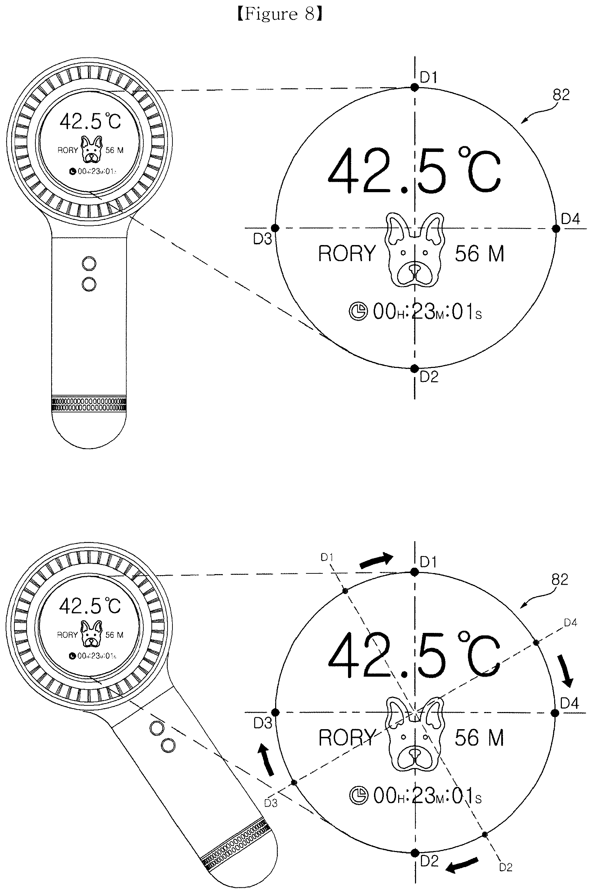

Referring to FIG. 8, the dryer 1 according to an embodiment of the present invention may display the graphic object in a right posture on a screen of the display panel 82 with reference to a field of view of the user, regardless of a degree of rotation of the dryer 1 and a degree of tilt of the dryer 1.

In the specification, the meaning of the graphic object displayed in the right posture is that the graphic object is displayed in an erected posture, not in a tilted posture, within the field of view of the user when the user views the graphic object presented at the rear of the dryer 1 while the dryer 1 is rotated or tilted.

Specifically, the display panel 82 includes a screen where the graphic object is displayed, and the controller 98 may rotate the screen of the display panel 82 based on rotation information sensed by the gyro sensor.

Due to the rotation of the screen of the display panel 82, the graphic object may be displayed in an erected posture in the field of view of the user.

More specifically, the controller 98 may set virtual partition lines that vertically and horizontally cross the center of the screen where the graphic object is displayed.

In addition, the controller 98 may set points at which the partition lines and an edge of a screen of the display panel 82 meet as an upper point D1, a lower point D2, a left point D3, and a right point D4.

The controller 98 may reflect motion information of the gyro sensor to rotate the screen of the display panel 82 so that the lower point D2 is positioned closest to a ground surface in the edge of the display panel 82.

As the screen of the display panel 82 is rotated, the graphic object displayed on the screen is rotated as well.

Thus, if the user places the rear of the dryer 1 within the field of view of the user in order to view the graphic object displayed on the display device 80, regardless of a direction from which the user grips the dryer 1 or regardless of a degree which the user tilts the dryer 1 during a drying operation, the user may be able to easily recognize and control the graphic object being rotated.

As such, a dryer according to an embodiment of the present invention is described with reference to the accompanying drawings. However, the present invention is not limited to the above embodiment, and it will be apparent to those skilled in the art that various modifications and changes can be made to the invention without departing from the scope of the invention. Therefore, it should be understood that the embodiments are provided by way of illustration only and are given to provide complete disclosure of the invention and to provide thorough understanding of the invention to those skilled in the art. Thus, it is intended that the invention covers the modifications and variations of this invention provided they come within the scope of the appended claims and their equivalents.

According to the dryer of the present invention, there are one or more effects as below.

First, the dryer according to the present invention include the display device disposed at the open rear through which air is introduced, thereby decreasing deterioration of the display device effectively.

Specifically, the display device is disposed in the introduction area, and therefore, although heat is generated in the display device, the heat may be emitted at the same time when air is introduced.

In addition, although the display device is heated by the heater, introduced external air of room temperature is cooled, thereby reducing deterioration of the display device.

Second, the controller of the dryer according to the present invention visually displays a drying suggested temperature optimized for age and a species of a drying object on the display device, thereby performing an optimized dry operation easily.

Third, the dryer according to the present invention rotates a graphic object displayed on the display device according to a motion of the dryer, thereby allowing a user to recognize and control the graphic object easily.

Specifically, a graphic object may be rotated based on rotation or tilt of the dryer may be reflected to rotate to be thereby erected within the field of view of the user, thereby allowing the user to be recognized and controlled easily.

## Claims

1. A dryer comprising:
a hollow casing (10) accommodating a fan (20) and a heater (H) and having an open front and an open rear;
a rear cover (15) connected to a rear edge of the casing (10) to cover the rear of the casing (10); and
a display device (80) disposed at the rear of the casing and covering at least a part of the open rear,
wherein the display device (80) and a rear edge of the casing (10) are spaced apart from each other to thereby form an air introduction area between the display device (80) and the rear edge of the casing (10),
**characterized in that** the rear cover (15) comprises a cylindrical rear cover side wall (15a), of which a front and a rear are open; and a rear cover plate (15b) covering the front of the rear cover side wall (15a) and being convex toward the front of the casing (10).

2. The dryer of claim 1, wherein the display device (80) is disposed on an outer surface of the rear cover (15).

3. The dryer of claim 2,
wherein an edge of the rear cover side wall (15a) is connected to the rear edge of the casing (10).

4. The dryer of claim 3,
wherein the rear cover (15) comprises a plurality of through holes (15d) to introduce air, and
wherein the plurality of through holes (15d) is disposed at least one of the rear cover side wall (15a) or the rear cover plate (15b).

5. The dryer of claim 3 or 4, wherein the display device (80) is disposed on the rear cover plate (15b) and surrounded by the rear cover side wall (15a).

6. The dryer of claim 5, wherein the display device (80) comprises:
a display fixing base (81) of which a cross-sectional area increases from a front toward a rear of the rear cover (15); and
a display panel (82) disposed at one end of the display fixing base (81), the one end which is adjacent to the rear of the rear cover (15).

7. The dryer of any one of claims 1 to 6, wherein the display device (80) comprises a plurality of display areas and is configured to display one or more graphic objects on at least one of the plurality of display areas; and
the dryer further comprises a controller (98) configured to allow to select a drying object and to change the one or more graphic objects based on pre-stored information, including at least one of age and a species of the selected drying object, to an identifier of a drying temperature for the selected drying object.

8. The dryer of claim 7, wherein the selecting of the drying object comprises changing, by the controller (98), the one or more graphic objects to pre-stored drying objects and selecting, by a user, one of the one or more changed pre-stored drying objects, or recognizing an identification tag attached to the drying object and then setting the selected drying object, by the controller, based on information relating to the recognized identification tag.

9. The dryer of claim 7 or 8, further comprising an external temperature sensor (S1) configured to sense body temperature information of the drying object,
wherein the controller (98) is configured to display the one or more graphic objects that are changed to an identifier of a body temperature on the at least one of the plurality of display areas based on the sensed body temperature information.

10. The dryer of any one of claims 7 to 9, further comprising a battery (99),
wherein the controller (98) is configured to sense charge information of the battery (99) and to display the one or more graphic objects that are changed to an identifier of at least one of a charge rate and a remaining operating time based on the sensed charge information on the at least one of the plurality of display areas.

11. The dryer of any one of claims 7 to 10, further comprising a gyro sensor configured to sense motion information of the dryer,
wherein the controller (98) is configured to restrict displaying of the one or more graphic objects when the sensed motion information exceeds a reference level and to display the one or more graphic objects when the sensed motion information is equal to or lower than the reference level.

12. The dryer of any one of claims 7 to 11, wherein the controller (98) is configured to enlarge a display area selected by a user from among the at least one of the plurality of display areas showing the one or more graphic objects, while reducing remaining display areas not selected by the user.

13. The dryer of any one of claims 7 to 10, wherein the controller (98) is configured to display the one or more graphic objects on the at least one of the plurality of display areas and to rotate the one or more graphic objects according to a motion of the dryer.

14. The dryer of claim 13, further comprising a gyro sensor configured to sense motion information of the dryer,
wherein the display device (80) comprises a display panel (82) comprising a screen where the one or more graphic objects are displayed, and
wherein the controller (98) is configured to rotate the screen of the display panel (82) based on the sensed motion information along with the rotating of the one or more graphic objects.

15. The dryer of claim 14, wherein the controller (98) is configured to rotate the screen of the display panel (82) in a manner that the lowest point in the screen, which is positioned most closest to a ground floor before the rotation of the screen, is still positioned most closet to the ground floor in the screen of the display panel (82) after the rotation of the screen.

## Patentansprüche

1. Trockner mit:
einem hohlen Gehäuse (10), das einen Ventilator (20) und eine Heizung (H) beherbergt und eine offene Vorderseite und eine offene Rückseite aufweist;
einer hinteren Abdeckung (15), die mit einer hinteren Kante des Gehäuses (10) verbunden ist, um die Rückseite des Gehäuses (10) abzudecken; und
einer Anzeigevorrichtung (80), die an der Rückseite des Gehäuses angeordnet ist und mindestens einen Teil der offenen Rückseite bedeckt,
wobei die Anzeigevorrichtung (80) und eine hinteren Kante des Gehäuses (10) voneinander beabstandet sind, um dadurch einen Lufteinleitungsbereich zwischen der Anzeigevorrichtung (80) und der hinteren Kante des Gehäuses (10) zu bilden,
**dadurch gekennzeichnet, dass** die hintere Abdeckung (15) eine zylindrische hintere Abdeckungsseitenwand (15a), von der eine Vorderseite und eine Rückseite offen sind, und eine hintere Abdeckplatte (15b) aufweist, die die Vorderseite der hinteren Abdeckungsseitenwand (15a) abdeckt und zur Vorderseite des Gehäuses (10) konvex ist.

2. Trockner nach Anspruch 1, wobei die Anzeigevorrichtung (80) auf einer Außenfläche der hinteren Abdeckung (15) angeordnet ist.

3. Trockner nach Anspruch 2, wobei eine Kante der hinteren Abdeckungsseitenwand (15a) mit der hinteren Kante des Gehäuses (10) verbunden ist.

4. Trockner nach Anspruch 3,
wobei die hintere Abdeckung (15) mehrere Durchgangslöcher (15d) aufweist, um Luft einzuleiten, und
wobei die mehreren Durchgangslöcher (15d) an mindestens einer der hinteren Abdeckungsseitenwand (15a) oder der hinteren Abdeckplatte (15b) angeordnet sind.

5. Trockner nach Anspruch 3 oder 4, wobei die Anzeigevorrichtung (80) auf der hinteren Abdeckplatte (15b) angeordnet und durch die hintere Abdeckungsseitenwand (15a) umgeben ist.

6. Trockner nach Anspruch 5, wobei die Anzeigevorrichtung (80) aufweist:
eine Anzeigebefestigungsbasis (81), deren Querschnittsfläche von einer Vorderseite zu einer Rückseite der hinteren Abdeckung (15) zunimmt; und
ein Anzeigefeld (82), das an einem Ende der Anzeigebefestigungsbasis (81), dem einen Ende, das zur Rückseite der hinteren Abdeckung (15) benachbart ist, angeordnet ist.

7. Trockner nach einem der Ansprüche 1 bis 6, wobei die Anzeigevorrichtung (80) mehrere Anzeigebereiche aufweist und konfiguriert ist, auf mindestens einem der mehreren Anzeigebereiche ein oder mehrere Grafikobjekte anzuzeigen; und
der Trockner ferner eine Steuereinheit (98) aufweist, die konfiguriert ist, es zu ermöglichen, ein Trocknungsobjekt auszuwählen und das eine oder die mehreren Grafikobjekte beruhend auf vorgespeicherten Informationen, die das Alter und/oder die Art des ausgewählten Trocknungsobjekts aufweisen, in eine Kennung einer Trocknungstemperatur für das ausgewählte Trocknungsobjekt umzuwandeln.

8. Trockner nach Anspruch 7, wobei das Auswählen des Trocknungsobjekts das Umwandeln des einen oder der mehreren Grafikobjekte durch die Steuereinheit (98) in vorgespeicherte Trocknungsobjekte und das Auswählen durch einen Benutzer des einen oder der mehreren umgewandelten vorgespeicherten Trocknungsobjekts oder das Erkennen eines Identifikationsetiketts, das am Trocknungsobjekt angebracht ist, und dann das Einstellen des ausgewählten Trocknungsobjekts durch die Steuereinheit beruhend auf Informationen aufweist, die sich auf das erkannte Identifikationsetikett beziehen.

9. Trockner nach Anspruch 7 oder 8, der ferner einen externen Temperatursensor (S1) aufweist, der konfiguriert ist, Körpertemperaturinformationen des Trocknungsobjekts zu erfassen, wobei der Steuereinheit (98) konfiguriert ist, das eine oder die mehreren Grafikobjekte, die in eine Kennung einer Körpertemperatur umgewandelt worden sind, auf dem mindestens einen der mehreren Anzeigebereiche beruhend auf den erfassten Körpertemperaturinformationen anzuzeigen.

10. Trockner nach einem der Ansprüche 7 bis 9, der ferner eine Batterie (99) aufweist, wobei die Steuereinheit (98) konfiguriert ist, Ladeinformationen der Batterie (99) zu erfassen und das eine oder die mehreren Grafikobjekte, die in eine Kennung einer Laderate und/oder einer verbleibenden Betriebszeit umgewandelt worden sind, beruhend auf den erfassten Ladeinformationen auf dem mindestens einen der mehreren Anzeigebereichen anzuzeigen.

11. Trockner nach einem der Ansprüche 7 bis 10, der ferner einen Kreiselsensor aufweist, der konfiguriert ist, Bewegungsinformationen des Trockners zu erfassen,
wobei die Steuereinheit (98) konfiguriert ist, die Anzeige des einen oder der mehreren Grafikobjekte einzuschränken, wenn die erfassten Bewegungsinformationen einen Referenzpegel überschreiten, und das eine oder die mehreren Grafikobjekte anzuzeigen, wenn die erfassten Bewegungsinformationen gleich oder niedriger als der Referenzpegel sind.

12. Trockner nach einem der Ansprüche 7 bis 11, wobei die Steuereinheit (98) konfiguriert ist, einen Anzeigebereich zu vergrößern, der durch einen Benutzer aus dem mindestens einen der mehreren Anzeigebereiche ausgewählt wird, die das eine oder die mehreren Grafikobjekte anzeigen, während restliche Anzeigebereiche reduziert werden, die nicht durch den Benutzer ausgewählt wurden.

13. Trockner nach einem der Ansprüche 7 bis 10, wobei die Steuereinheit (98) konfiguriert ist, das eine oder die mehreren Grafikobjekte auf dem mindestens einen der mehreren Anzeigebereiche anzuzeigen und das eine oder die mehreren Grafikobjekte gemäß einer Bewegung des Trockners zu drehen.

14. Trockner nach Anspruch 13, der ferner einen Kreiselsensor aufweist, der konfiguriert ist, Bewegungsinformationen des Trockners zu erfassen,
wobei die Anzeigevorrichtung (80) ein Anzeigefeld (82) aufweist, das einen Bildschirm aufweist, wo das eine oder die mehreren Grafikobjekte angezeigt werden, und
wobei die Steuereinheit (98) konfiguriert ist, den Bildschirm des Anzeigefelds (82) beruhend auf den erfassten Bewegungsinformationen zusammen mit der Drehung des einen oder der mehreren Grafikobj ekte zu drehen.

15. Trockner nach Anspruch 14, wobei die Steuereinheit (98) konfiguriert ist, den Bildschirm des Anzeigefelds (82) in einer Weise zu drehen, dass der niedrigste Punkt auf dem Bildschirm, der vor der Drehung des Bildschirms dem Fußboden am nächsten angeordnet war, nach der Drehung des Bildschirms auf dem Bildschirm des Anzeigefelds (82) immer noch dem Fußboden am nächsten angeordnet ist.

## Revendications

1. Séchoir, comprenant :
un boîtier creux (10) où sont logés un ventilateur (20) et une résistance (H), et ayant une face avant ouverte et une face arrière ouverte ;
un couvercle arrière (15) raccordé à un bord arrière du boîtier (10) pour couvrir la face arrière du boîtier (10) ; et
un dispositif d'affichage (80) disposé à l'arrière du boîtier et couvrant au moins une partie de la face arrière ouverte,
où le dispositif d'affichage (80) et le bord arrière du boîtier (10) sont espacés l'un de l'autre pour former une zone de pénétration d'air entre le dispositif d'affichage (80) et le bord arrière du boîtier (10),
**caractérisé en ce que** le couvercle arrière (15) comprend une paroi latérale (15a) cylindrique de couvercle arrière, ouverte à l'avant et à l'arrière ; et une plaque (15b) de couvercle couvrant l'avant de la paroi latérale (15a) de couvercle arrière et présentant une convexité vers l'avant du boîtier (10).

2. Séchoir selon la revendication 1, où le dispositif d'affichage (80) est disposé sur une surface extérieure du couvercle arrière (15).

3. Séchoir selon la revendication 2,
où le bord de la paroi latérale (15a) de couvercle arrière est raccordé au bord arrière du boîtier (10).

4. Séchoir selon la revendication 3,
où le couvercle arrière (15) présente une pluralité de trous traversants (15d) pour la pénétration de l'air, et
où la pluralité de trous traversants (15d) est ménagé sur la paroi latérale (15a) de couvercle arrière et/ou la plaque (15b) de couvercle arrière.

5. Séchoir selon la revendication 3 ou la revendication 4, où le dispositif d'affichage (80) est disposé sur la plaque (15b) de couvercle arrière et est entouré par la paroi latérale (15a) de couvercle arrière.

6. Séchoir selon la revendication 5, où le dispositif d'affichage (80) comprend :
une base de fixation d'écran (81) dont la surface de section transversale augmente de l'avant vers l'arrière du couvercle arrière (15) ; et
un écran d'affichage (82) disposé à une extrémité de la base de fixation d'écran (81), ladite extrémité étant adjacente à l'arrière du couvercle arrière (15).

7. Séchoir selon l'une des revendications 1 à 6, où le dispositif d'affichage (80) comprend une pluralité de zones d'affichage et est prévu pour afficher un ou plusieurs objets graphiques sur au moins une zone de la pluralité de zones d'affichage ; et où ledit séchoir comprend en outre un contrôleur (98) prévu pour permettre la sélection d'un objet à sécher et pour changer le ou les objets graphiques sur la base d'informations pré-mémorisées, comprenant l'âge et/ou l'espèce de l'objet à sécher sélectionné, dans un indicateur de température de séchage pour l'objet à sécher sélectionné.

8. Séchoir selon la revendication 7, où la sélection de l'objet à sécher comprend le changement, par le contrôleur (98), du ou des objets graphiques dans des objets à sécher pré-mémorisés et la sélection par un utilisateur, d'un objet parmi le ou les objets à sécher pré-mémorisés changés, ou la reconnaissance d'une étiquette d'identification attachée à l'objet à sécher avant le réglage de l'objet à sécher sélectionné, par le contrôleur, sur la base d'informations relatives à l'étiquette d'identification reconnue.

9. Séchoir selon la revendication 7 ou la revendication 8, comprenant en outre un capteur de température extérieur (S1) prévu pour détecter des informations de température corporelle de l'objet à sécher,
où le contrôleur (98) est prévu pour afficher le ou les objets graphiques changés dans un indicateur de température corporelle sur ladite au moins une zone de la pluralité de zones d'affichage sur la base des informations de température corporelle détectée.

10. Séchoir selon l'une des revendications 7 à 9, comprenant en outre une batterie (99), le contrôleur (98) étant prévu pour détecter des informations de charge de la batterie (99) et pour afficher le ou les objets graphiques changés dans un indicateur de niveau de charge et/ou de temps de fonctionnement restant sur la base des informations de charge détectée sur ladite au moins une zone de la pluralité de zones d'affichage.

11. Séchoir selon l'une des revendications 7 à 10, comprenant en outre un capteur gyroscopique prévu pour détecter des informations de mouvement du séchoir,
où le contrôleur (98) est prévu pour empêcher l'affichage du ou des objets graphiques si les informations de mouvement détecté dépassent un niveau de référence, et pour afficher le ou les objets graphiques si les informations de mouvement détecté sont égales ou inférieures au niveau de référence.

12. Séchoir selon l'une des revendications 7 à 11, où le contrôleur (98) est prévu pour agrandir une zone d'affichage sélectionnée par un utilisateur parmi ladite au moins une zone de la pluralité de zones d'affichage représentant le ou les objets graphiques, en diminuant les zones d'affichage restantes non sélectionnées par l'utilisateur.

13. Séchoir selon l'une des revendications 7 à 10, où le contrôleur (98) est prévu pour afficher le ou les objets graphiques sur ladite au moins une zone de la pluralité de zones d'affichage et pour soumettre le ou les objets graphiques à une rotation en fonction du mouvement du séchoir.

14. Séchoir selon la revendication 13, comprenant en outre un capteur gyroscopique prévu pour détecter des informations de mouvement du séchoir,
où le dispositif d'affichage (80) comprend un écran d'affichage (82) comprenant une surface d'affichage du ou des objets graphiques sont affichés, et
où le contrôleur (98) est prévu pour soumettre la surface de l'écran d'affichage (82) à une rotation sur la base des informations de mouvement détecté simultanément à la rotation du ou des objets graphiques.

15. Séchoir selon la revendication 14, où le contrôleur (98) est prévu pour soumettre la surface de l'écran d'affichage (82) à une rotation, de telle manière que le point le plus bas de la surface, le plus proche du plancher avant rotation de la surface, reste le plus proche du plancher sur la surface de l'écran d'affichage (82) après rotation de la surface.
